# EUROPEAN PATENT SPECIFICATION

(11) **EP 1 476 286 B1**
(45) Date of publication and mention of the grant of the patent: **14.03.2007**
(21) Application number: 03702355.3
(22) Date of filing: 14.01.2003
(51) Int. Cl.: B27K 5/00

(54) **USE OF A COMPOSITION FOR COATING AT LEAST A PART OF A SURFACE ON A WOOD SUBSTRATE CONTAINING NATURALLY OCCURRING RESIN**
VERWENDUNG EINER ZUSAMMENSETZUNG ZUM BESCHICHTEN VON ZUMINDEST EINES TEILS EINER OBERFLÄCHE EINES NATÜRLICHEN HARZ ENTHALTENDEN HOLZSUBSTRATS
UTILISATION D'UNE COMPOSITION POUR RECOUVRIR AU MOINS UNE PARTIE D'UNE SURFACE D'UN SUBSTRAT EN BOIS CONTENANT DE LA RESINE NATURELLE

(30) Priority: 15.01.2002 DK 200200059
(43) Date of publication of application: 17.11.2004
(73) Proprietor: VKR Holding A/S, 2860 Søborg (DK)
(72) Inventor: STROEBECH, Esben, DK-2970 Hoersholm (DK); KARTHÄUSER, Joachim, S-192 51 Sollentuna (SE); JENSEN, Soeren, Soegaard, DK-1718 Copenhagen K (DK); GRINVALDS, Carsten, Broennum, DK-2620 Albertslund (DK); AGGERHOLM, Erik, Kjoelhede, DK-6971 Spjald (DK)
(74) Representative: Rasmussen, Torben Ravn
(86) International application number: PCT/DK2003/000021
(87) International publication number: WO 2003/059035

(56) References cited:
- WO-A-00/56824
- WO-A-01/94086
- WO-A-03/000762
- DE-A- 3 918 980
- US-A- 5 273 787
- DATABASE WPI Section Ch, Week 199332 Derwent Publications Ltd., London, GB; Class A25, AN 1993-252791 XP002241087 & JP 05 170858 A (SUMITOMO BAKELITE CO), 9 July 1993 (1993-07-09)
- DATABASE WPI Section Ch, Week 199703 Derwent Publications Ltd., London, GB; Class A21, AN 1997-032606 XP002241088 & RU 2 058 363 C (CHEM MECH RES INST), 20 April 1996 (1996-04-20)
- DATABASE WPI Section Ch, Week 199003 Derwent Publications Ltd., London, GB; Class A21, AN 1990-020766 XP002241089 & SU 1 470 751 A (KESTELMAN P I), 7 April 1989 (1989-04-07)

## Description

The invention relates to the use of a composition for coating at least a part of a surface on a wood substrate containing naturally occurring resin.

In building components made of wood it is desired that the wood has an aesthetic appealing surface and, of course, good strength and durability. This is particularly relevant within the field of manufacturing window frames and doors of wood. In such uses it is important that the wood appears substantially free of errors and free of cracks and knots. But in order to use as much as possible of the wood, without repairing all errors, a number of small cracks and small knots are normally allowed.

However, even small cracks and small knots are critical, as a certain degree of exudation of resin will always occur via those cracks and knots in the wood. This will leave the wood with sticky spots on the surface, causing colour deviations when paint or other surface coating is applied to the surface due to difference in adhesion, and furthermore the spots of resin may lead to discoloration of the wood.

The problem is enhanced with modern forestry where the trees are cut down all through the year including in the springtime where the turgescence is at the highest level. Furthermore the methods of preservation may enhance the exudation of the resin, as preservation often includes use of organic solvents, which will dissolve the resin and cause it to flow more easily.

Several methods of stopping the exudation resin from resin-containing wood are known. These include two main methods, namely a) sealing the surface with different simple sealing agents, or b) dissolving or washing out resin using aqueous solutions or other solvents.

The drawbacks of those methods are: a) the costs are high in relation to the temporary effect which is achieved, b) the quality of the state-of-the-art techniques is not sufficient in relation to current market demands. As an example, a simple "mechanical lock" as sealant merely slows down the exudation of resin. In time the resin will seek nearby channels to the wood surface and exude from those.

Examples of the methods mentioned above are application of primer/wax-systems or shellac to the surface of the wood.

Japanese patent application no. JP3166905A discloses a method where wood is impregnated with a melamine-based resin, followed by drying with high frequency heating (micro-waves) .

An example of method b) is immersion of the wood in hot water followed by immersion in an impregnating liquid, which seals the resin.

Other known methods are laminating by coating the wood with paper or HDF boards.

The known methods are all characterized by the use of a sealing or coating agent to prevent the exudation of resin from the wood. The application of the sealing or coating agent is usually followed by an after-treatment, which is very often a heat treatment.

The sealing of the surface of the wood will lose its effect if the sealing, which is relatively thin, is destroyed. Hereby it is possible for the resin to exudate through the broken parts of the sealing. Furthermore the known types of sealing systems tend to become discoloured under the influence of sunlight and environment.

Due to the drawbacks of the known methods there is a need for a method of treating resin-containing wood, which is simple and which will not lose effect with time. Furthermore there is a need for a treatment which is effective for a time span meeting current and future market and consumer demands.

The object of the present invention is to provide an alternative treatment of resin containing wood.

Moreover it is an object of the present invention to provide a method for treating resin-containing wood, which will provide a substantially permanent sealing of at least a part of the surface of the wood to prevent exudation of resin from the wood.

A further object of the present invention is to provide a method for treating a resin-containing wood substrate, which will provide a sealing which will be effective without discolouring throughout the lifetime of the wood substrate.

The object of the invention is furthermore to provide a method for treating resin-containing wood, which method serves the purpose of controlling, slowing down or avoiding the exudation of resin from wood products. These objects and other objects are all achieved by the method according to the invention as defined in the claims.

The invention is based on the unexpected finding that it is possible to block the exudation of the resin, which is naturally present in wood, by applying a coating of a resin compatible material and binding the coating to the surface of the wood. The coating used according to the prior art techniques is unable to provide a coating with long-term properties. The known coatings have a strong tendency of loosening from the surface of the wood as they are not resin compatible. Such problems are avoided by the use of resin compatible materials. Moreover, the resin compatible materials according to the invention compared to prior art techniques also provides the benefit, that use of isocyanates can be avoided. Isocyanates are commonly used to harden the known coatings for wood. However, isocyanates are environmental risky as the may seriously damage the health of the people who are in contact with these isocyanates during processing.

In growing trees the natural present resin is normally under pressure and exudes from the wood through small openings in the bark of the trees. When the trees are cut down and de-barked for industrial use a lot of openings in the form of channels, cracks and knots are exposed. This will of course heavily enhance the natural tendency of the wood to exude resin, which is naturally present in the wood to the surface of the wood leaving sticky spots or gum-like drops on the surface. In time the natural resin will harden and the stickiness will vanish, but the natural hardening of the resin is a process which continues for several years. When the resin has hardened, it has a smooth relatively hard surface similar to surfaces of synthetic hard plastics. Moreover, the resin in the surface of the wood, when exposed to light (UV, visible and IR light) will lead to a discolouration of the wood.

The naturally present resins in wood are a relatively complex mixture of various substances including terpenes. The natural resin in wood normally comprises oleoresins like monoterpenoids, diterpenoids and parenchyma resin comprising triterponoids and steroids. Furthermore the resins may comprise a mixture of non-volatile, partly unsaturated compounds including esters and free acids. The components causing miscolouration may be different from those mentioned above, their exact chemical constitution is not known beyond doubt, and they may be present in very small concentrations. Therefore the collective term "resin" is used here in the context of the problem which is solved by the invention disclosure. As mentioned, the resin forms an extremely sticky gum which is capable of undergoing a certain slow hardening when exposed to the air.

By the use according to the invention the resin naturally present in the wood is blocked within the wood sealed from the surface of the wood. Exuding resin is effectively stopped and the problems caused by exuding resin are avoided.

The use provides wood or pieces of wood with a dry and relatively hard surface without loose knots, indentations or holes and which has excellent properties for further treatment like application of paint, laquer or other coatings.

In one aspect the invention relates to use of a composition for coating at least a part of a surface on a wood substrate containing naturally occurring resin, which composition comprises one or more binders; one or more substances selected from the group of oils, fillers, and additives; and a resin compatible material selected from the group consisting of styrene-isoprene block polymers, butadiene-styrene block polymers, isoprene rubbers, vinyl-based polyolefins, acryl-based polyolefins, epoxy-based thermoplastics, and phenoxy resins, wherein the resin compatible material is used for crosslinking to said naturally occurring resin.

The term wood substrate designates a substrate for the hardening process, which may be a typically shaped wood article, structural wood, timber, poles, etc., but also encompasses material comprising comminuted wood such as chips or building plates, laminated or composite material comprising wood, etc.

The resin compatible material is by nature a material, which is capable to bind to the resin natural present in the wood substrate. The binding is chemical and will later be described in further detail.

The resin compatible material is preferably selected from the group consisting of styrenebutadiene rubber, styrene-isoprene block polymers and butadiene-styrene block polymers. The resin compatible material is more preferably polymer rubbers consisting of diolefines and/or styrene, including styrene-butadiene rubber, styrene-isoprene/and/or/butadiene-styrene block copolymers, pure isoprene rubber (Ziegler-Natta basis or based on anionic polymerisation), said block copolymers optionally being derivatised by grafting reactions affording polymers which also afford a degree of compatibility with polar wood constituents, said polymers optionally being hydrogenated affording better UV protection, and finally including thermoplastic adhesive resins such as on the basis of thermoplastic urethanes, vinyl- or acryl-based polyolefins or phenoxy Resins (e.g. Dow Chemical's Paphen (TM) series), preferably epoxy based thermoplastics, more preferably Dow Chemical's Blox series (e.g. Blox 200). Phenoxy resins and epoxy-based thermoplastics, are also known as thermoplastic poly(hydroxyether) and thermoplastic polyetheramines (e.g. phenol,4,4'-(1-methylethylidene)bispolymer with (chloromethyl)oxirane and analogous compounds).

Preferably the resin compatible material is applied as a film or a foil. The film or foil may have a preferred thickness of about 0.1 to 3000 µm, more preferably a thickness of about 0.2 to 100 µm.

In a preferred embodiment of the use, the resin compatible material is mixed with fillers and preferably fillers which are selected from the group consisting of silica, SiO₂, TiO₂, talcum, lime, mica, carbonates, hydroxides, oxides, carbon black and lignin. The fillers can provide improved properties with regard to UV protection and have a decreasing effect on the tendency of the resin to cause discolouration, most likely due to the high specific surface provided by the fillers, and the more or less pronounced chemical affinity of the fillers to colouring substances. Another beneficial function of the fillers is to block or absorb light (UV, visible and IR light). The fillers may be present in amounts of about 0-90 % by weight.

In a preferred embodiment of the use according to the invention, the resin compatible material is bonded to the surface of the wood substrate by a chemical crosslinking of the resin compatible material to the resin in the wood substrate. By crosslinking the resin compatible material to the naturally present resin in the wood substrate a hardening effect appears, and a result is obtained where the resin is trapped within the wood substrate and exudation of resin to the surface of the wood substrate is avoided.

Preferably, the crosslinking is initiated by UV light, electron beam (EB), heat, ultrasound, or other sources of high energy and radiation. Typically, the energy of photons causing crosslinking will be of the equivalent of 250 nanometer (nm) or shorter.

The effect of the treatment must be sufficient to overcome the effect of optional fillers, but without initiating discolouration of the resin.

Moreover, it is preferred to initiate the crosslinking by peroxides, peroxide compounds, sulfur, sulfur compounds, sulfur donators, diazo compounds or UV absorbing molecules capable of starting radical chain reactions. The UV absorbers are preferably selected from the group consisting of aromatic compounds containing oxygen, such as benzophenone, and the range of commercially available UV starters (e.g. Ciba-Geigy's Irgacure series).

Furthermore, in an alternative preferred embodiment, the resin compatible material is applied as a film or a foil. Optionally, the film or foil is formed in situ on the substrate after evaporation of a suitable polar or nonpolar solvent such as on the basis of water, oxygenates, aromatics or paraffins.

Moreover, the wood substrate may be prepared for the film or foil application by priming with a suitable glue or adhesive, and preferably the glue or adhesive is selected from the group consisting of natural rubber based adhesives, hotmelt adhesives on the basis of styrene-isoprene/butadiene block copolymers, hotmelt adhesives on acrylic basis and adhesives on epoxy basis.

Preferably, the use further comprises the step of applying a heat treatment, such as by infrared lamps or microwave heating. The heat treatment will increase the effect of the crosslinking of the resin compatible material to the naturally present resin in the wood.

In a preferred embodiment of the use of the composition for treatment of wood substrate containing naturally resin, which comprises the steps of:
- identifying resin channels and/or cracks and/or knots in the surface of said wood substrate, and
- applying the coating as defined above to said identified resin channels and/or cracks and/or knots in the surface of said wood substrate, and
- binding the coating to the surface of the wood substrate by crosslinking of the resin compatible material to the resin in the wood substrate.

According to this embodiment, it is possible to treat the wood substrate in a very economic and cost-effective way. As explained previously, the naturally present resin in wood flows in channels or resin channels from which it may penetrate to the surface of the wood substrate via cracks or knots. Cracks or knots constitute weaknesses in the wood substrate and exudation of resin substantially takes place from the channels, cracks and knots. Consequently under normal conditions, it will be sufficient to block the resin naturally present in the channels, cracks and knots by a applying a resin compatible coating on the surface of the wood substrate where those weaknesses are present, and binding the resin compatible coating to the resin.

The channels, cracks and knots can be identified using a manual or visual inspection or by the use of a known wood sorting system. Such a known system may for instance be WoodEye from the company Innovativ Vision AB, Sweden. Once the channels, cracks and knots are identified, the resin present therein can be blocked from the surface by subjecting the channels, cracks or knots to an application of a resin compatible coating to the weak parts of the surface and binding the resin compatible coating to the resin. The process can be controlled by a computer programmed to run the process automatically.

Preferably, the method further comprises the step of removing at least a part of identified resin channels and/or cracks and/or knots in the surface of the wood substrate before the resin compatible coating is applied. More preferably, a layer extending from the surface and into the wood substrate with a thickness from about 0.1 mm to about 0.5 mm is removed from the identified resin channels and/or cracks and/or knots in the surface of said wood substrate before the coating is applied. The layer, which is removed from the surface, substantially has the shape of a disc and substantially corresponds to the size and shape of the coating to be applied. The layer may be removed e.g. by cutting or drilling. Hence it is possible to obtain a smooth and even surface on the treated wood substrate.

The use according to the invention also provides for blocking and/or hardening at least a part of the resin in a wood substrate.

The coating of resin compatible material serves to prevent exudation of the resin present in the wood substrate. The resin compatible material is able to adhere to the surface of the wood substrate and the resin by a chemical reaction and seal off the resin within the wood substrate.

Preferably, the resin compatible material is selected from the group consisting of polymer rubbers, styrenebutadiene rubber, styrene-isoprene block polymers and butadiene-styrene block polymers. See further pages 6 and 7 for a full list of suitable materials.

In order to obtain the best possible properties of the surface of the resin containing wood substrate it is preferred that the compatible material has a thickness between 0.1 and 3000 µm, more preferably between 0.2 and 100 µm.

Moreover, in a preferred embodiment, the resin compatible material comprises one or more fillers, preferably the resin and/or wood compatible material comprises filler in an amount from 0 to 90 weight-%, more preferably in an amount from 20 to 50 weight-%.

Preferably, the one or more filler is selected from the group consisting of inorganic oxides e.g. silica, SiO₂ and TiO₂, talcum, lime, mica, carbonates, hydroxides, oxides, carbon black and lignin. The preferred fillers provide excellent properties to the resin compatible material with regard to UV resistance and resistance to moisture and general weather conditions.

The composition is particularly useful in the use according to the invention, as resin compatible material and filler material for cracks, etc. in the surface can be applied in one process. Thus the work and cost can be reduced.

The resin compatible material is selected from the group consisting of styrenebutadiene rubber, styrene-isoprene block polymers, butadiene-styrene block polymers, phenoxy resins, and thermoplastic epoxy. The resin and/or wood compatible material is connected or bonded to the wood substrate as described previously.

The one or more binders are selected from the group consisting of urethane, epoxy, acrylate, polyvinyl alcohol, polyvinyl acetate, polyvinyl acrylate and similar binders.

The one or more oils are selected from the group consisting of syntetic oils and mineral oils. The purpose of the oils is primarily to function as a solvent for components in the composition and to give the best possible rheological properties to the composition during the application to the wood substrate.

The fillers are selected from the group consisting of inorganic oxides, e.g. silica, SiO₂ and TiO₂, talcum, lime, mica, carbonates and lignin. The fillers, besides their filling properties may serve as absorbers for UV light, moisture, etc. Moreover the fillers may improve the rheologically properties of the composition during application. During application the rheological properties of the composition should be similar to the rheological properties of putty. When the composition is applied to the wood substrate, the binder will cure and the oil will evaporate to the environment.

In order to incorporate desired properties in the composition according to the invention additives can be added to the composition, and preferably the additives are selected from the group consisting of dye, stabilizers, rheological aids, fungicides and pesticides.

In a preferred embodiment of the composition for use according to the invention the composition comprises:

| | |
|---|---|
| white spirit | 5-10 % |
| solvent naphta (crude oil) | 1-5 % |
| medium-heavy aliphatic 2-butanonoxim | <1% |
| organic cobalt compound | <0.5% |
| urethane | 0.1-50% |
| resin and/or wood compatible material | 0.1-60% |
| balance | carbonates |

The composition has good rheological properties during application and has excellent coating and filling characteristic for wood substrates.

During use the composition is preferably applied to irregularities, cracks and knots on the surface of the resin containing wood substrate. The composition can be applied manually or by the use of machines.

The invention will now be illustrated in further detail in the following examples.

### Example 1

A number of samples constituted by pieces of fresh cut pine wood with dimensions 5x2x5 cm were prepared to be treated according to the invention. The treatment and the results are listed in table 1.

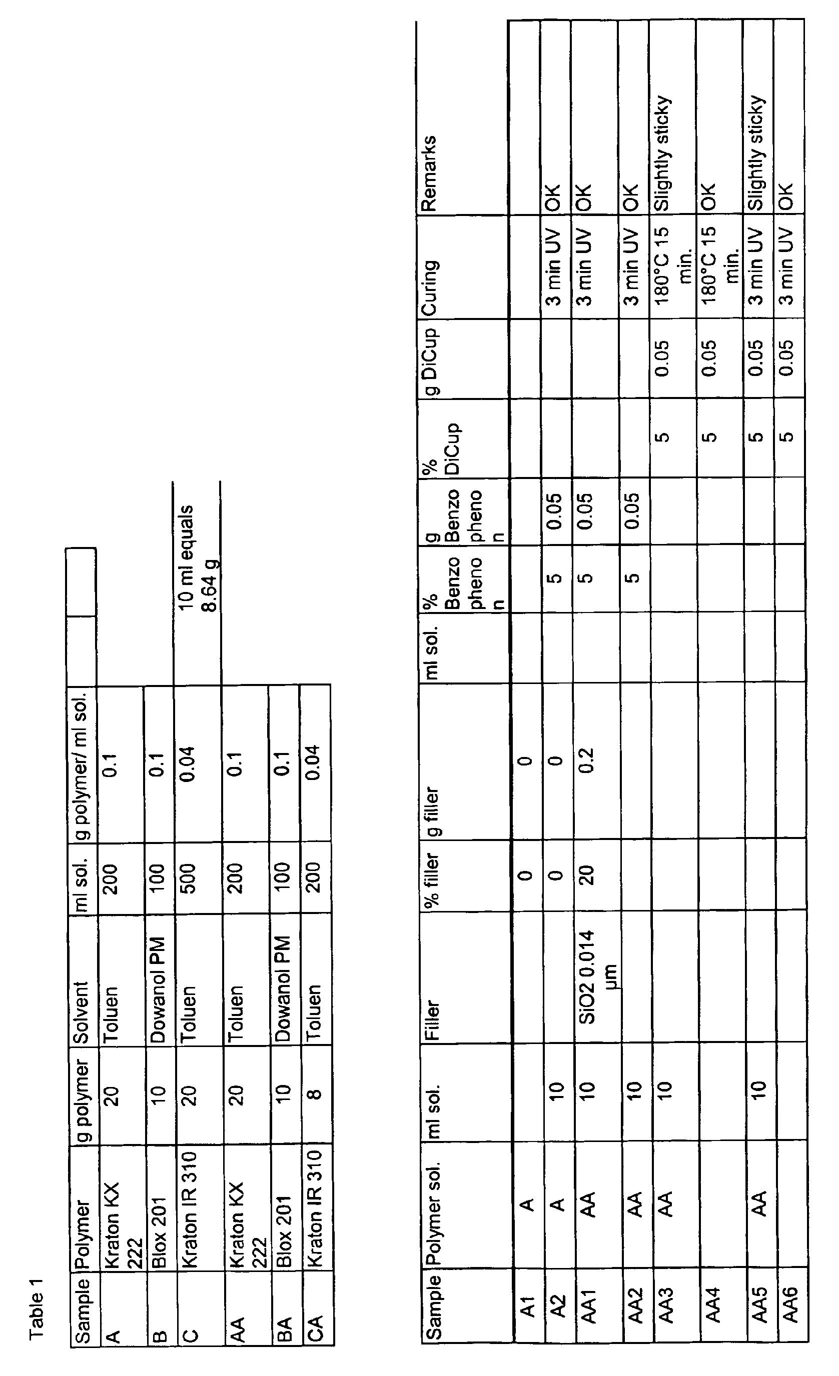

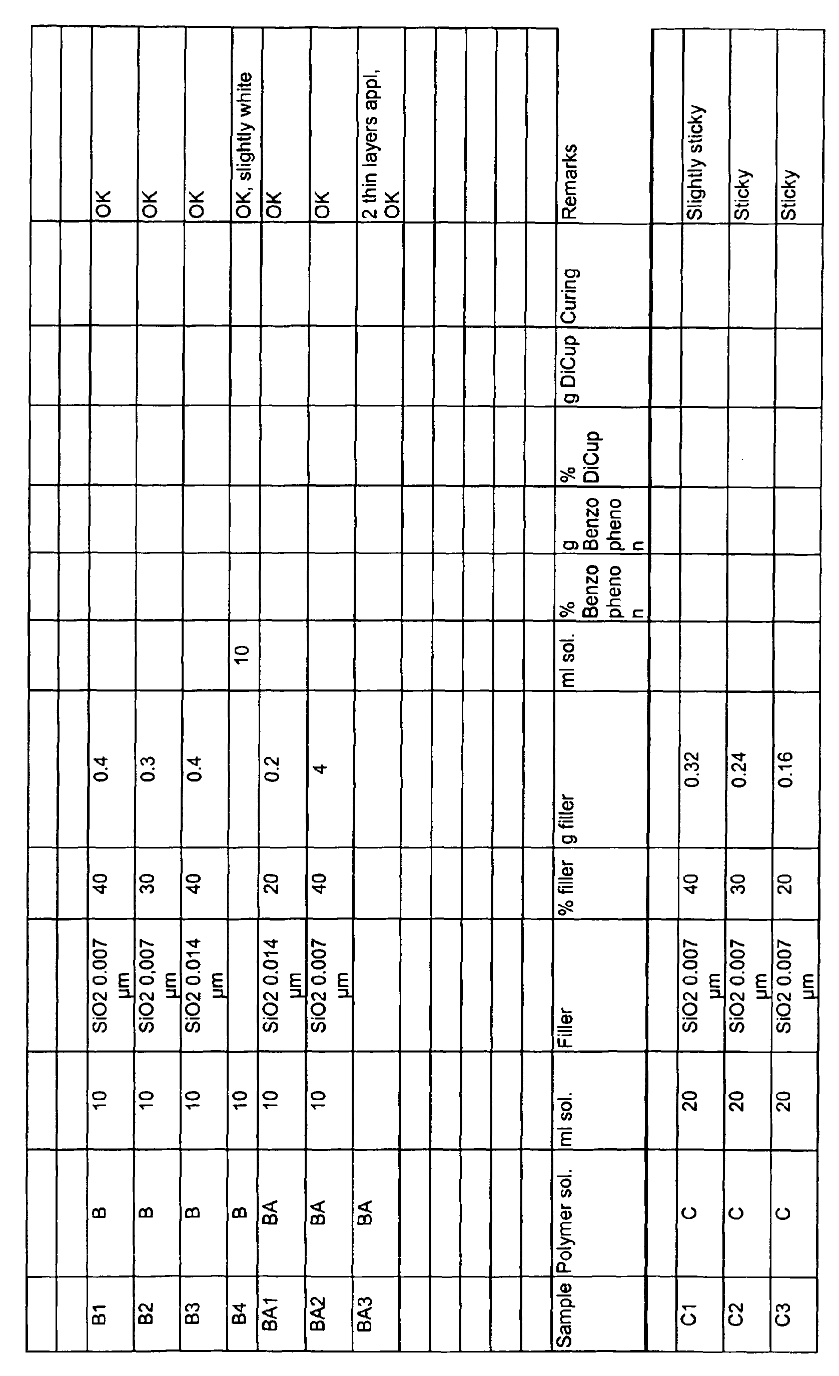

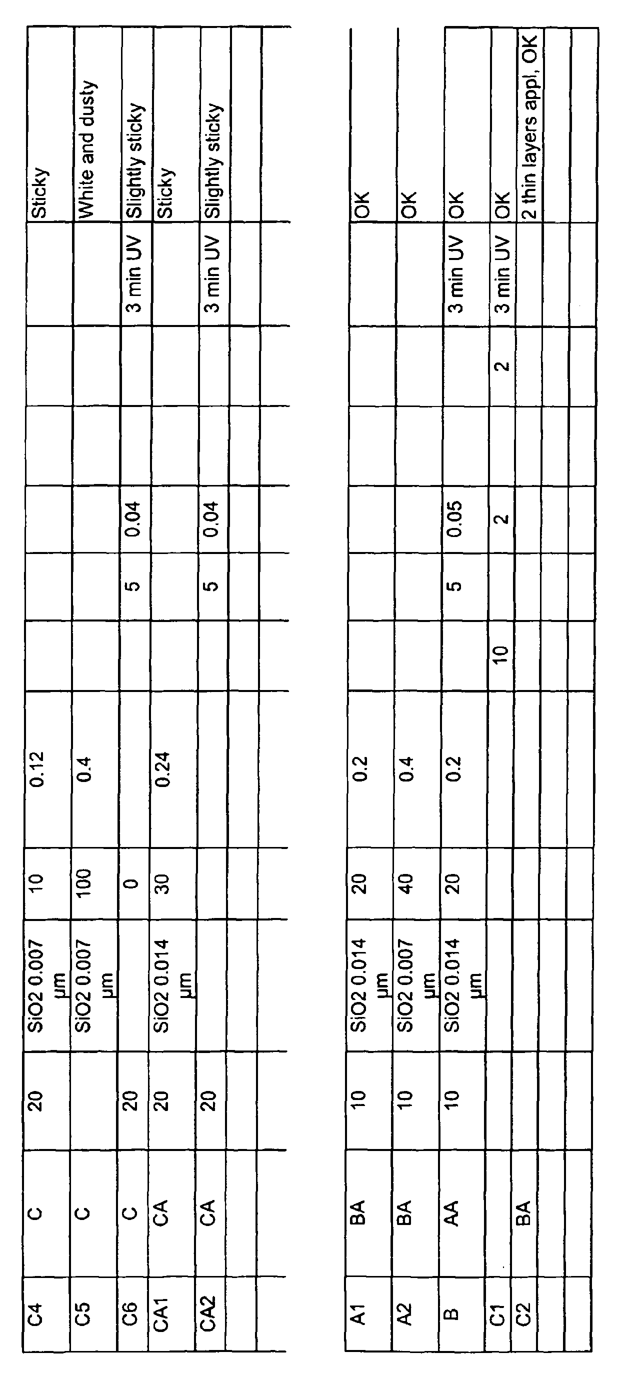

The results of the treatments according to the invention clearly indicate that the surfaces of the wood pieces are effectively blocked from exuding resin. This is due to the effect that e.g. BLOX adheres well to the surface of both wood and resin and that the BLOX penetrates into the knot. As a result a non-sticky surface is obtained.

### Example 2

Samples which were treated as described in table 1 were tested by the wood testing institute AB Trätek, Sweden.

The samples were cut with dimensions 230x70x10 mm according to Trätek Rapport P0006009. The samples were then treated according to the treatments of table 1.

Ten different systems were tested. Five samples of each system were tested. Furthermore, tests were run on uncoated samples for reference. These samples are denoted R in table 2. Furthermore, other test series were conducted using the same batch of wood but with a PUR coating. This PUR coating is considered to be state of the art in the anti-discoloration systems available on the market. Due to variations in the wooden raw material, significant scattering is normally expected from batch to batch. Therefore, the absolute levels of the ΔE value will vary from batch to batch. However, in order to obtain as good properties as possible with regard to resistance to discolouration ΔE should be as low as possible.

The samples were exposed for 72 hours according to the standard ASTM G26-92 in an Atlas Weather-o-Meter with a Xenon lamp of 6500 W. The radiation intensity was 0.35 W/m² at the wavelength 340 nm.

The discolouration of the samples was measured with a TOPCON Color Differense Meter RD-100 according to Trätek Rapport P0006009, and the ΔE value was measured on the sample. A low ΔE value expresses good resistance to discolouration, and compared with the reference samples the samples according to the invention show excellent resistance to discolouration. The results are listed in table 2.

**Table 2**

| Sample no. | | No. | L* | a* | b* | E*ab | Mean. E*ab, kvist | deltaE | MED deltaE | STD deltaE | |
|---|---|---|---|---|---|---|---|---|---|---|---|
| A1-I1 | ref. | | 1 | 0.48 | 0.39 | 0.39 | 0.73 | | | | |
| | | 1 | 2 | -1.48 | -0.08 | 4.97 | 5.19 | 4.54 | 3.81 | 4.6 | 0.8 |
| | | 2 | 3 | -0.97 | 0.13 | 3.8 | 3.93 | | | | |
| | | 3 | 4 | -0.65 | 0.12 | 3.95 | 4.01 | | | | |
| | | 4 | 5 | -1.35 | -0.24 | 5.55 | 5.71 | | | | |
| | | 5 | 6 | -0.61 | 0.11 | 3.8 | 3.85 | | | | |
| A1-I2 | ref. | | 7 | 0.52 | 0.44 | 0.12 | 0.69 | | | | |
| | | 1 | 8 | -1.4 | -0.3 | 7.86 | 7.99 | 5.51 | 4.82 | | |
| | | 2 | 9 | -0.66 | 0.17 | 3.34 | 3.4 | | | | |
| | | 3 | 10 | -0.81 | 0.1 | 5.07 | 5.13 | | | | |
| | | 4 | | | | | | | | | |
| | | 5 | | | | | | | | | |
| A1-I3 | ref. | | 11 | 0.44 | 0.5 | 0.13 | 0.68 | | | | |
| | | 1 | 12 | -1.02 | -0.1 | 5.94 | 6.02 | 5.17 | 4.49 | | |
| | | 2 | 13 | -1.14 | 0.02 | 5.96 | 6.07 | | | | |
| | | 3 | 14 | -0.52 | 0.3 | 3.36 | 3.41 | | | | |
| | | 4 | | | | | | | | | |
| | | 5 | | | | | | | | | |
| A1-I4 | ref. | | 15 | 0.41 | 0.54 | 0.17 | 0.7 | | | | |
| | | 1 | 16 | -1.97 | -0.21 | 9.32 | 9.53 | 6.71 | 6.01 | | |
| | | 2 | 17 | -0.97 | 0.43 | 4.82 | 4.94 | | | | |
| | | 3 | 18 | -1.14 | 0.13 | 5.54 | 5.66 | | | | |
| | | 4 | | | | | | | | | |
| | | 5 | | | | | | | | | |
| A1-I5 | ref. | | 19 | 0.46 | 0.7 | 0.33 | 0.9 | | | | |
| | | 1 | 20 | -1.18 | 0.1 | 6.08 | 6.19 | 4.56 | 3.66 | | |
| | | 2 | 21 | -0.48 | 0.35 | 3.56 | 3.61 | | | | |
| | | 3 | 22 | -0.31 | 0.55 | 2.49 | 2.57 | | | | |
| | | 4 | 23 | -0.94 | 0.4 | 5.18 | 5.28 | | | | |
| | | 5 | 24 | -0.84 | 0.34 | 5.07 | 5.15 | | | | |
| | | | | | | | | | | | |
| A1-V1 | ref. | | 25 | 0.45 | 0.68 | 0.23 | 0.85 | | | | |
| | | 1 | 26 | -3.3 | -0.57 | 16.03 | 16.38 | 13.03 | 12.18 | 9.3 | 3.3 |
| | | 2 | 27 | -1.12 | -0.31 | 7.06 | 7.16 | | | | |
| | | 3 | 28 | -3.01 | -0.78 | 16.16 | 16.45 | | | | |
| | | 4 | 29 | -3.23 | -0.29 | 13.56 | 13.94 | | | | |
| | | 5 | 30 | -1.91 | -0.7 | 11.06 | 11.24 | | | | |
| A1-V2 | ref. | | 31 | 0.49 | 0.6 | 0.14 | 0.78 | | | | |
| | | 1 | 32 | -3.11 | -0.15 | 13.19 | 13.55 | 11.94 | 11.16 | | |
| | | 2 | 33 | -2.45 | 0.25 | 10.02 | 10.32 | | | | |
| | | 3 | | | | | | | | | |
| | | 4 | | | | | | | | | |
| | | 5 | | | | | | | | | |
| A1-V3 | ref. | | 34 | 0.26 | 0.63 | 0.3 | 0.74 | | | | |
| | | 1 | 35 | -1.87 | -0.76 | 10.92 | 11.11 | 10.94 | 10.20 | | |
| | | 2 | 36 | -2.1 | -0.27 | 10.23 | 10.45 | | | | |
| | | 3 | 37 | -2.9 | -0.51 | 13.03 | 13.36 | | | | |
| | | 4 | 38 | -2.08 | 0 | 9.49 | 9.72 | | | | |
| | | 5 | 39 | -1.91 | -0.23 | 9.88 | 10.07 | | | | |
| A1-V4 | ref. | | 40 | 0.5 | 0.68 | 0.23 | 0.88 | | | | |
| | | 1 | 41 | -0.44 | 0.43 | 3.7 | 3.75 | 3.81 | 2.93 | | |
| | | 2 | 42 | -0.37 | -0.14 | 3.92 | 3.94 | | | | |
| | | 3 | 43 | -0.54 | 0.09 | 3.7 | 3.74 | | | | |
| | | 4 | | | | | | | | | |
| | | 5 | | | | | | | | | |
| A1-V5 | ref. | | 44 | 0.35 | 0.56 | 0.02 | 0.66 | | | | |
| | | 1 | 45 | -1.52 | -0.61 | 9.51 | 9.65 | 10.55 | 9.89 | | |
| | | 2 | 46 | -2.08 | -0.18 | 9.46 | 9.69 | | | | |
| | | 3 | 47 | -2.02 | -0.85 | 12.11 | 12.3 | | | | |
| | | 4 | | | | | | | | | |
| | | 5 | | | | | | | | | |
| A2-I1 | ref. | | 48 | 0.55 | 0.27 | 0.13 | 0.62 | | | | |
| | | 1 | 49 | -0.58 | -0.24 | 4.31 | 4.36 | 4.32 | 3.70 | 6.5 | 2.8 |
| | | 2 | 50 | -0.59 | -0.29 | 4.65 | 4.69 | | | | |
| | | 3 | 51 | -0.54 | -0.18 | 3.87 | 3.91 | | | | |
| | | 4 | | | | | | | | | |
| | | 5 | | | | | | | | | |
| A2-12 | ref. | | 52 | 0.61 | 0.25 | 0.26 | 0.71 | | | | |
| | | 1 | 53 | -0.53 | -0.3 | 4.9 | 4.94 | 5.90 | 5.19 | | |
| | | 2 | 54 | -1 | -0.48 | 7.01 | 7.1 | | | | |
| | | 3 | 55 | -1.33 | -0.74 | 8.57 | 8.71 | | | | |
| | | 4 | 56 | -0.34 | 0.05 | 2.99 | 3.01 | | | | |
| | | 5 | 57 | -0.79 | -0.35 | 5.69 | 5.75 | | | | |
| A2-I3 | ref. | | 58 | 0.39 | 0.29 | 0.12 | 0.5 | | | | |
| | | 1 | 59 | -3.06 | -0.78 | 13.41 | 13.77 | 12.06 | 11.56 | | |
| | | 2 | 60 | 2.5 | -0.5 | 10.04 | 10.35 | | | | |
| | | 3 | | | | | | | | | |
| | | 4 | | | | | | | | | |
| | | 5 | | | | | | | | | |
| A2-I4 | ref. | | 61 | 0.59 | 0.28 | 0.28 | 0.71 | | | | |
| | | 1 | 62 | -0.65 | -0.11 | 4.33 | 4.38 | 5.25 | 4.54 | | |
| | | 2 | 63 | -0.74 | -0.07 | 4.61 | 4.67 | | | | |
| | | 3 | 64 | -1.47 | -0.01 | 6.54 | 6.71 | | | | |
| | | 4 | 65 | -1.13 | -0.09 | 5.63 | 5.75 | | | | |
| | | 5 | 66 | -0.97 | 0.14 | 4.64 | 4.74 | | | | |
| A2-I5 | ref. | | 67 | 0.63 | 0.42 | 0.29 | 0.81 | | | | |
| | | 1 | 68 | -1.75 | -0.11 | 8.13 | 8.31 | 8.31 | 7.50 | | |
| | | 2 | | | | | | | | | |
| | | 3 | | | | | | | | | |
| | | 4 | | | | | | | | | |
| | | 5 | | | | | | | | | |
| A2-V1 | ref. | | 69 | 0.33 | 0.8 | 0.13 | 0.88 | | | | |
| | | 1 | 70 | -4.5 | -0.03 | 19.24 | 19.76 | 16.83 | 15.95 | 13.7 | 4.1 |
| | | 2 | 71 | -2.95 | -0.45 | 14.15 | 14.46 | | | | |
| | | 3 | 72 | -3.22 | -0.02 | 14.21 | 14.57 | | | | |
| | | 4 | 73 | -4.31 | -0.21 | 18.37 | 18.87 | | | | |
| | | 5 | 74 | -3.78 | -0.19 | 16.04 | 16.48 | | | | |
| A2-V2 | ref. | | 75 | 0.17 | 0.72 | 0.45 | 0.86 | | | | |
| | | 1 | 76 | -2.88 | -0.64 | 14.82 | 15.11 | 13.57 | 12.71 | | |
| | | 2 | 77 | -2.16 | -0.02 | 10.58 | 10.8 | | | | |
| | | 3 | 78 | -2.74 | -0.44 | 14.54 | 14.8 | | | | |
| | | 4 | | | | | | | | | |
| | | 5 | | | | | | | | | |
| A2-V3 | ref. | | 79 | 0.36 | 0.59 | 0.37 | 0.79 | | | | |
| | | 1 | 80 | -2.5 | -0.24 | 11.44 | 11.71 | 10.05 | 9.26 | | |
| | | 2 | 81 | -1.59 | 0.07 | 7.88 | 8.04 | | | | |
| | | 3 | 82 | -2.25 | -0.22 | 10.14 | 10.39 | | | | |
| | | 4 | | | | | | | | | |
| | | 5 | | | | | | | | | |
| A2-V4 | ref. | | 83 | 0.19 | 0.63 | 0.28 | 0.72 | | | | |
| | | 1 | 84 | -5.76 | -0.05 | 21.58 | 22.34 | 21.03 | 20.31 | | |
| | | 2 | 85 | -4.41 | -0.28 | 17.54 | 18.09 | | | | |
| | | 3 | 86 | -6.26 | 0.54 | 21.76 | 22.65 | | | | |
| | | 4 | | | | | | | | | |
| | | 5 | | | | | | | | | |
| A2-V5 | ref. | | 87 | 0.25 | 0.57 | 0.18 | 0.64 | | | | |
| | | 1 | 88 | -2.64 | -0.12 | 11.15 | 11.46 | 10.77 | 10.13 | | |
| | | 2 | 89 | -2.48 | -0.87 | 12.4 | 12.68 | | | | |
| | | 3 | 90 | -1.84 | 0 | 7.08 | 7.32 | | | | |
| | | 4 | 91 | -2.48 | -0.45 | 11.35 | 11.63 | | | | |
| | | 5 | | | | | | | | | |
| B-U1 | ref. | | 92 | 0.39 | 0.56 | 0.45 | 0.82 | | | | |
| | | 1 | 93 | -2.83 | -0.51 | 12.31 | 12.64 | 1.,64 | 11.82 | 8.0 | 2.4 |
| | | 2 | | | | | | | | | |
| | | 3 | | | | | | | | | |
| | | 4 | | | | | | | | | |
| | | 5 | | | | | | | | | |
| B-U2 | ref. | | 94 | 0.43 | 0.46 | -0.02 | 0.63 | | | | |
| | | 1 | 95 | -1.28 | -0.67 | 9.2 | 9.32 | 9.38 | 8.75 | | |
| | | 2 | 96 | -2.76 | 0.06 | 11.27 | 11.6 | | | | |
| | | 3 | 97 | -1.22 | -0.53 | 8.5 | 8.61 | | | | |
| | | 4 | 98 | -2.05 | -0.59 | 11.29 | 11.49 | | | | |
| | | 5 | 99 | -0.72 | -0.21 | 5.85 | 5.9 | | | | |
| B-U3 | ref. | | 100 | 0.61 | 0.4 | 0.42 | 0.84 | | | | |
| | | 1 | 101 | -0.98 | -0.29 | 6.56 | 6.64 | 5.20 | 4.36 | | |
| | | 2 | 102 | -0.79 | -0.24 | 5.3 | 5.36 | | | | |
| | | 3 | 103 | -0.37 | 0.14 | 3.23 | 3.26 | | | | |
| | | 4 | 104 | -0.96 | -0.09 | 5.26 | 5.34 | | | | |
| | | 5 | 105 | -0.78 | -0.14 | 5.36 | 5.42 | | | | |
| B-U4 | ref. | | 106 | 0.36 | 0.47 | 0.46 | 0.75 | | | | |
| | | 1 | 107 | -1.66 | -0.33 | 8.6 | 8.77 | 7.73 | 6.98 | | |
| | | 2 | 108 | -0.94 | -0.01 | 5.49 | 5.57 | | | | |
| | | 3 | 109 | -1.69 | -0.33 | 8.68 | 8.85 | | | | |
| | | 4 | | | | | | | | | |
| | | 5 | | | | | | | | | |
| B-U5 | ref. | | 110 | 0.5 | 0.54 | 0.34 | 0.81 | | | | |
| | | 1 | 111 | -1.4 | -0.43 | 8.71 | 8.83 | 8.77 | 7.96 | | |
| | | 2 | 112 | -1.42 | -0.3 | 8.34 | 8.46 | | | | |
| | | 3 | 113 | -1.54 | -0.35 | 8.88 | 9.02 | | | | |
| | | 4 | | | | | | | | | |
| | | 5 | | | | | | | | | |
| B-V1 | ref. | | 114 | 0.28 | 0.6 | 0.56 | 0.86 | | | | |
| | | 1 | 115 | -5.41 | 0.52 | 18.17 | 18.96 | 20.87 | 20.01 | 20.9 | 4.3 |
| | | 2 | 116 | -9.03 | 1.89 | 27.85 | 29.34 | | | | |
| | | 3 | 117 | -5.44 | 0.25 | 19.53 | 20.28 | | | | |
| | | 4 | 118 | -5.35 | 0.6 | 19.8 | 20.52 | | | | |
| | | 5 | 119 | -3.7 | 0.03 | 14.78 | 15.23 | | | | |
| B-V2 | ref. | | 120 | 0.26 | 0.64 | 0.05 | 0.7 | | | | |
| | | 1 | 121 | -3.79 | 0.65 | 13.74 | 14.26 | 14.26 | 13.56 | | |
| | | 2 | | | | | | | | | |
| | | 3 | | | | | | | | | |
| | | 4 | | | | | | | | | |
| | | 5 | | | | | | | | | |
| B-V3 | ref. | | 122 | 0.19 | 0.62 | 0.37 | 0.74 | | | | |
| | | 1 | 123 | -7.02 | 0.68 | 19.97 | 21.18 | 21.61 | 20.87 | | |
| | | 2 | 124 | -5.01 | 1.1 | 16.2 | 16.99 | | | | |
| | | 3 | 125 | -9.08 | 2.33 | 24.95 | 26.66 | | | | |
| | | 4 | | | | | | | | | |
| | | 5 | | | | | | | | | |
| B-V4 | ref. | | 126 | 0.37 | 0.52 | 0.51 | 0.82 | | | | |
| | | 1 | 127 | -6.81 | 1.84 | 20.73 | 21.9 | 24.69 | 23.87 | | |
| | | 2 | 128 | -7.22 | 0.74 | 24.21 | 25.27 | | | | |
| | | 3 | 129 | -8.69 | 2.12 | 25.37 | 26.9 | | | | |
| | | 4 | | | | | | | | | |
| | | 5 | | | | | | | | | |
| B-V5 | ref. | | 130 | 0.11 | 0.63 | 0.28 | 0.7 | | | | |
| | | 1 | 131 | -6.14 | 0.79 | 23 | 23.82 | 26.82 | 26.12 | | |
| | | 2 | 132 | -8.65 | 1.46 | 26.7 | 28.1 | | | | |
| | | 3 | 133 | -9.72 | 2.62 | 26.7 | 28.53 | | | | |
| | | 4 | | | | | | | | | |
| | | 5 | | | | | | | | | |
| C1-I1 | ref. | | 134 | 0.27 | 0.55 | 0.1 | 0.62 | | | | |
| | | 1 | 135 | -3.11 | -0.62 | 12.93 | 13.32 | 11.98 | 11.36 | 10.4 | 1.9 |
| | | 2 | 136 | -2.81 | -0.42 | 11.73 | 12.07 | | | | |
| | | 3 | 137 | -2.03 | -0.53 | 9.86 | 10.08 | | | | |
| | | 4 | 138 | -3.08 | -0.46 | 12.58 | 12.96 | | | | |
| | | 5 | 139 | -2.63 | -0.42 | 11.14 | 11.45 | | | | |
| C1-I2 | ref. | | 140 | -0.16 | 0.64 | 0.12 | 0.67 | | | | |
| | | 1 | 141 | -2.53 | -0.31 | 9.38 | 9.72 | 9.30 | 8.63 | | |
| | | 2 | 142 | -2.32 | -0.28 | 8.56 | 8.87 | | | | |
| | | 3 | | | | | | | | | |
| | | 4 | | | | | | | | | |
| | | 5 | | | | | | | | | |
| C1-I3 | ref. | | 143 | 0.4 | 0.68 | -0.02 | 0.79 | | | | |
| | | 1 | 144 | -4.18 | -0.08 | 17.55 | 18.04 | 14.49 | 13.70 | | |
| | | 2 | 145 | -2.2 | -0.57 | 12.07 | 12.28 | | | | |
| | | 3 | 146 | -2.52 | -0.51 | 12.88 | 13.14 | | | | |
| | | 4 | | | | | | | | | |
| | | 5 | | | | | | | | | |
| C1-I4 | ref. | | 147 | 0.4 | 0.66 | 0.08 | 0.78 | | | | |
| | | 1 | 148 | -2.46 | -0.74 | 12.7 | 12.96 | 10.57 | 9.79 | | |
| | | 2 | 149 | -1.51 | -0.53 | 8.98 | 9.12 | | | | |
| | | 3 | 150 | -1.57 | -0.56 | 9.49 | 9.63 | | | | |
| | | 4 | | | | | | | | | |
| | | 5 | | | | | | | | | |
| C1-I5 | ref. | | 151 | 0.41 | 0.66 | -0.11 | 0.79 | | | | |
| | | 1 | 152 | -1.34 | -0.58 | 8.68 | 8.8 | 9.28 | 8.49 | | |
| | | 2 | 153 | -1.45 | -0.63 | 8.68 | 8.83 | | | | |
| | | 3 | 154 | -1.22 | -0.59 | 9,.3 | 9.33 | | | | |
| | | 4 | 155 | -0.87 | -0.48 | 7.04 | 7.11 | | | | |
| | | 5 | 156 | -2.16 | -0.57 | 12.14 | 12.34 | | | | |
| C1-V1 | ref. | | 157 | 0.37 | 0.57 | 0.4 | 0.78 | | | | |
| | | 1 | 158 | -2.33 | -0.31 | 11.26 | 11.5 | 13.66 | 12.88 | 17.3 | 4.0 |
| | | 2 | 159 | -2.66 | -0.11 | 11.84 | 12.13 | | | | |
| | | 3 | 160 | -5.25 | 0.83 | 17.63 | 18.41 | | | | |
| | | 4 | 161 | -2.78 | -0.28 | 12.14 | 12.46 | | | | |
| | | 5 | 162 | -3.25 | -0.1 | 13.4 | 13.78 | | | | |
| C1-V2 | ref. | | 163 | 0.48 | 0.63 | 0.26 | 0.83 | | | | |
| | | 1 | 164 | -6.15 | 0.53 | 23.54 | 24.34 | 23.78 | 22.95 | | |
| | | 2 | 165 | -5.79 | 0.56 | 21.41 | 22.19 | | | | |
| | | 3 | 166 | -6.38 | 0.48 | 23.97 | 24.81 | | | | |
| | | 4 | | | | | | | | | |
| | | 5 | | | | | | | | | |
| C1-V3 | ref. | | 167 | 0.49 | 0.6 | 0.43 | 0.89 | | | | |
| | | 1 | 168 | -5.86 | 1.17 | 19.45 | 20.35 | 19.73 | 18.84 | | |
| | | 2 | 169 | -4.88 | 0.19 | 18.46 | 19.1 | | | | |
| | | 3 | | | | | | | | | |
| | | 4 | | | | | | | | | |
| | | 5 | | | | | | | | | |
| C1-V4 | ref. | | 170 | 0.4 | 0.65 | 0.31 | 0.82 | | | | |
| | | 1 | 171 | -2.3 | 0.07 | 10.49 | 10.74 | 13.51 | 12.69 | | |
| | | 2 | 172 | -4.2 | -0.4 | 16.82 | 17.34 | | | | |
| | | 3 | 173 | -2.42 | -0.64 | 12.18 | 12.44 | | | | |
| | | 4 | | | | | | | | | |
| | | 5 | | | | | | | | | |
| C1-V5 | ref. | | 174 | 0.54 | 0.59 | 0.33 | 0.86 | | | | |
| | | 1 | 175 | -4.5 | -0.37 | 19.03 | 19.56 | 19.87 | 19.01 | | |
| | | 2 | 176 | -4.61 | -0.16 | 19.75 | 20.28 | | | | |
| | | 3 | 177 | -4.42 | 0.01 | 19.27 | 19.77 | | | | |
| | | 4 | | | | | | | | | |
| | | 5 | | | | | | | | | |
| C2-I1 | ref. | | 178 | 0.56 | 0.55 | 0.4 | 0.88 | | | | |
| | | 1 | 179 | -0.13 | 0.5 | 2.2 | 2.26 | 2.63 | 1.75 | 3.5 | 1.9 |
| | | 2 | 180 | -0.38 | 0.34 | 3.29 | 3.33 | | | | |
| | | 3 | 181 | -0.3 | 0.37 | 2.99 | 3.03 | | | | |
| | | 4 | 182 | 0.04 | 0.42 | 1.68 | 1.73 | | | | |
| | | 5 | 183 | -0.25 | 0.32 | 2.77 | 2.8 | | | | |
| C2-12 | ref. | | 184 | 0.37 | 0.57 | 0.36 | 0.77 | | | | |
| | | 1 | 185 | -1.58 | 0.09 | 6.34 | 6.53 | 6.53 | 5.76 | | |
| | | 2 | | | | | | | | | |
| | | 3 | | | | | | | | | |
| | | 4 | | | | | | | | | |
| | | 5 | | | | | | | | | |
| C2-I3 | ref. | | 186 | 0.51 | 0.58 | 0.58 | 0.96 | | | | |
| | | 1 | 187 | 0.04 | 0.39 | 1.75 | 1.79 | 1.94 | 0.98 | | |
| | | 2 | 188 | -0.07 | 0.38 | 1.86 | 1.9 | | | | |
| | | 3 | 189 | -0.23 | 0.43 | 2.07 | 2.12 | | | | |
| | | 4 | | | | | | | | | |
| | | 5 | | | | | | | | | |
| C2-I4 | ref. | | 190 | 0.49 | 0.55 | 0.24 | 0.77 | | | | |
| | | 1 | 191 | -0.73 | -0.1 | 5.43 | 5.48 | 5.10 | 4.33 | | |
| | | 2 | 192 | -0.56 | 0.07 | 4.33 | 4.36 | | | | |
| | | 3 | 193 | -0.75 | -0.17 | 5.4 | 5.46 | | | | |
| | | 4 | | | | | | | | | |
| | | 5 | | | | | | | | | |
| C2-I5 | ref. | | 194 | 0.34 | 0.52 | 0.48 | 0.79 | | | | |
| | | 1 | 195 | -1.09 | -0.16 | 5.59 | 5.7 | 5.70 | 4.91 | | |
| | | 2 | | | | | | | | | |
| | | 3 | | | | | | | | | |
| | | 4 | | | | | | | | | |
| | | 5 | | | | | | | | | |
| C2-V1 | ref. | | 196 | 0.24 | 0.57 | 0.49 | 0.78 | | | | |
| | | 1 | 197 | -0.95 | 0.1 | 3.64 | 3.76 | 4.45 | 3.67 | 7.0 | 3.9 |
| | | 2 | 198 | -1.45 | -0.01 | 6.16 | 6.32 | | | | |
| | | 3 | 199 | -0.94 | 0.14 | 3.12 | 3.26 | | | | |
| | | 4 | | | | | | | | | |
| | | 5 | | | | | | | | | |
| C2-V2 | ref. | | 200 | 0.2 | 0.62 | 0.32 | 0.72 | | | | |
| | | 1 | 201 | -0.47 | 0.32 | 3.59 | 3.64 | 3.64 | 2.92 | | |
| | | 2 | | | | | | | | | |
| | | 3 | | | | | | | | | |
| | | 4 | | | | | | | | | |
| | | 5 | | | | | | | | | |
| C2-V3 | ref. | | 202 | 0.56 | 0.57 | 0.04 | 0.79 | | | | |
| | | 1 | 203 | -5.12 | -0.31 | 20.65 | 21.28 | 14.72 | 13.93 | | |
| | | 2 | 204 | -3.68 | -0.36 | 15.68 | 16.11 | | | | |
| | | 3 | 205 | -2.69 | -0.16 | 13.13 | 13.41 | | | | |
| | | 4 | 206 | -1.79 | -0.71 | 10.89 | 11.06 | | | | |
| | | 5 | 207 | -2.9 | 0.31 | 11.38 | 11.74 | | | | |
| C2-V4 | ref. | | 208 | 0.01 | 0.76 | 0.31 | 0.82 | | | | |
| | | 1 | 209 | -2.18 | 0.16 | 8,36 | 8.65 | 8.65 | 7.83 | | |
| | | 2 | | | | | | | | | |
| | | 3 | | | | | | | | | |
| | | 4 | | | | | | | | | |
| | | 5 | | | | | | | | | |
| C2-V5 | ref. | | 210 | 0.28 | 0.62 | 0.12 | 0.69 | | | | |
| | | 1 | 211 | -1.27 | 0 | 6.39 | 6.51 | 7.45 | 6.76 | | |
| | | 2 | 212 | -1.72 | -0.1 | 7.03 | 7.24 | | | | |
| | | 3 | 213 | -1.82 | -0.06 | 8.4 | 8.6 | | | | |
| | | 4 | | | | | | | | | |
| | | 5 | | | | | | | | | |
| R-I1 | ref. | | 214 | 0.56 | 0.6 | 0.25 | 0.85 | | | | |
| | | 1 | 215 | -1.55 | -0.31 | 8.92 | 9.06 | 5.97 | 5.12 | 8.8 | 4.2 |
| | | 2 | 216 | -0.65 | 0.34 | 3.27 | 3.35 | | | | |
| | | 3 | 217 | -0.68 | 0.14 | 4.06 | 4.12 | | | | |
| | | 4 | 218 | -1.2 | -0.19 | 6.36 | 6.48 | | | | |
| | | 5 | 219 | -1.17 | -0.07 | 6.76 | 6.86 | | | | |
| R-I2 | ref. | | 220 | 0.27 | 0.67 | 0.25 | 0.76 | | | | |
| | | 1 | 221 | -1.42 | -0.39 | 8.84 | 8.97 | 8.39 | 7.63 | | |
| | | 2 | 222 | -0.86 | -0.13 | 5.56 | 5.63 | | | | |
| | | 3 | 223 | -1.85 | -0.55 | 10.41 | 10.58 | | | | |
| | | 4 | | | | | | | | | |
| | | 5 | | | | | | | | | |
| R-I3 | ref. | | 224 | -0.04 | 0.63 | 0.48 | 0.8 | | | | |
| | | 1 | 225 | -1.7 | -0.04 | 6.87 | 7.08 | 7.29 | 6.49 | | |
| | | 2 | 226 | -1.61 | -0.2 | 9.11 | 9.25 | | | | |
| | | 3 | 227 | -1.35 | 0.04 | 5.39 | 5.55 | | | | |
| | | 4 | | | | | | | | | |
| | | 5 | | | | | | | | | |
| R-I4 | ref. | | 228 | -0.2 | 0.65 | 0.38 | 0.79 | | | | |
| | | 1 | 229 | -1.28 | -0.5 | 8.38 | 8.49 | 8.49 | 7.7 | | |
| | | 2 | | | | | | | | | |
| | | 3 | | | | | | | | | |
| | | 4 | | | | | | | | | |
| | | 5 | | | | | | | | | |
| R-I5 | ref. | | 230 | 0.46 | 0.59 | 0.21 | 0.78 | | | | |
| | | 1 | 231 | -6.73 | 1.05 | 20.13 | 21.25 | 17.70 | 16.92 | | |
| | | 2 | 232 | -6.39 | 0.81 | 19.98 | 20.99 | | | | |
| | | 3 | 233 | -2.32 | -0.4 | 10.52 | 10.78 | | | | |
| | | 4 | 234 | -3.08 | 0.31 | 12 | 12.4 | | | | |
| | | 5 | 235 | -7.2 | 1 | 21.9 | 23.07 | | | | |
| R-V1 | ref. | | 236 | 0.47 | 0.66 | 0.26 | 0.86 | | | | |
| | | 1 | 237 | -1.07 | 0.16 | 6.58 | 6.67 | 7.16 | 6.30 | 15.48 | 6.89 |
| | | 2 | 238 | -1.29 | -0.05 | 7.45 | 7.56 | | | | |
| | | 3 | 239 | -1.56 | -0.42 | 9.52 | 9.66 | | | | |
| | | 4 | 240 | -0.35 | 0.4 | 3.16 | 3.2 | | | | |
| | | 5 | 241 | -1.47 | -0.21 | 8.57 | 8.7 | | | | |
| R-V2 | ref. | | 242 | 0.2 | 0.65 | 0.51 | 0.86 | | | | |
| | | 1 | 243 | -7.51 | 1.44 | 25.77 | 26.88 | 25.65 | 24.79 | | |
| | | 2 | 244 | -6.12 | 0.21 | 23.63 | 24.41 | | | | |
| | | 3 | | | | | | | | | |
| | | 4 | | | | | | | | | |
| | | 5 | | | | | | | | | |
| R-V3 | ref. | | 245 | 0.31 | 0.39 | 0.63 | 0.8 | | | | |
| | | 1 | 246 | -2.8 | -1.11 | 15.35 | 15.64 | 21.27 | 20.47 | | |
| | | 2 | 247 | -6.2 | 0.34 | 22.99 | 23.81 | | | | |
| | | 3 | 248 | -6.1 | 0.23 | 23.57 | 24.35 | | | | |
| | | 4 | | | | | | | | | |
| | | 5 | | | | | | | | | |
| R-V4 | ref. | | 249 | 0.45 | 0.31 | 0.75 | 0.92 | | | | |
| | | 1 | 250 | -4.11 | 0.01 | 17.72 | 18.19 | | | 17.62 | 16.70 |
| | | 2 | 251 | -3.58 | -0.18 | 15.99 | 16.39 | | | | |
| | | 3 | 252 | -3.63 | -0.55 | 17.89 | 18.27 | | | | |
| | | 4 | | | | | | | | | |
| | | 5 | | | | | | | | | |
| R-V5 | ref. | | 253 | 0.45 | 0.63 | 0.5 | 0.92 | | | | |
| | | 1 | 254 | -2.09 | 0.11 | 9.02 | 9.26 | | | 10.09 | 9.17 |
| | | 2 | 255 | -3.12 | 0.11 | 11.82 | 12.23 | | | | |
| | | 3 | 256 | -2.06 | -0.28 | 10.2 | 10.41 | | | | |
| | | 4 | 257 | -2.15 | 0.17 | 8.59 | 8.86 | | | | |
| | | 5 | 258 | -2.11 | -0.15 | 9.46 | 9.69 | | | | |

## Claims

1. Use of a composition for coating at least a part of a surface on a wood substrate containing naturally occurring resin, which composition comprises one or more binders; one or more substances selected from the group of oils, fillers, and additives; and a resin compatible material selected from the group consisting of styrene-isoprene block polymers, butadiene-styrene block polymers, isoprene rubbers, vinyl-based polyolefins, acryl-based polyolefins, epoxy-based thermoplastics, and phenoxy resins, wherein the resin compatible material is used for crosslinking to said naturally occurring resin.

2. Use according to claim 1, wherein said resin compatible material is pure isoprene rubber (Ziegler-Natta basis or based on anionic polymerisation).

3. Use according to claim 1 or 2, wherein said resin compatible material is applied as a film or a foil.

4. Use according to claims 1-3, wherein said resin compatible material is mixed with fillers, preferably said fillers are selected from the group consisting of silica, SiO₂, TiO₂, talcum, lime, mica, carbonates and lignin.

5. Use according to claim 1, wherein the crosslinking is initiated by UV light, electron beam (EB), heat, ultrasound, or other sources of high energy and radiation.

6. Use according to claim 1, wherein the crosslinking is initiated by peroxide compounds, sulfur, sulfur compounds, diazo compounds or UV absorbing molecules.

7. Use according to claims 1-6, which further comprises the step of applying a heat treatment.

8. Use according to any one of claims 1-7 for the treatment of wood substrate containing naturally occurring resin, which comprises the steps of:
- identifying resin channels and/or cracks and/or knots in the surface of said wood substrate, and
- applying the coating as defined in claim 1 to said identified resin channels and/or cracks and/or knots in the surface of said wood substrate, and
- binding the coating to the surface of the wood substrate by crosslinking of the resin compatible material to the resin in the wood substrate.

9. Use according to claim 8, which further comprises the step of removing at least a part of the identified resin channels and/or cracks and/or knots in the surface of said wood substrate before applying the coating.

10. Use according to claim 9, wherein a layer extending from the surface and into the wood substrate with a thickness of 0.1 to 0.5 mm is removed from the identified resin channels and/or cracks and/or knots in the surface of said wood substrate before applying the coating.

11. Use according to any one of claims 1 to 10, wherein the resin compatible material has a thickness between 0.1 and 3000 µm, preferably between 0.2 and 100 µm.

12. Use according to any one claims 1 to 11, wherein the composition comprises filler in an amount from 0 to 90 weight-%, preferably in an amount from 20 to 50 weight-%.

13. Use according to claim 1, wherein the one or more binders are selected from the group consisting of urethane, epoxy, acrylate, polyvinyl alcohol, polyvinyl acetate and polyvinyl acrylate.

14. Use according to claim 1, wherein the one or more oils are selected from the group consisting of syntetic oils and mineral oils.

15. Use according to claim 1, wherein the additives are selected from the group consisting of dye, stabilizers, rheological aid.

16. Use according to claims 1-15, wherein the composition comprises:
| | |
|---|---|
| white spirit | 5-10 % |
| solvent naphta (crude oil) | 1-5 % |
| medium-heavy aliphatic 2-butanonoxim | <1% |
| organic cobalt compound | <0.5% |
| urethane | 0.1-50% |
| resin compatible material | 0.1-60% |
| balance | carbonates |
wherein the resin compatible material is as defined in claim 1.

17. Use according to claims 1-16, wherein the composition is applied to irregularities, cracks and knots on the surface of the wood substrate containing naturally occurring resin.

## Patentansprüche

1. Verwendung einer Zusammensetzung zum Beschichten von zumindest einem Teil einer Oberfläche eines natürlich vorkommendes Harz enthaltenden Holzsubstrats, welche Zusammensetzung ein oder mehrere Bindemittel; eine oder mehrere Substanzen ausgewählt aus der Gruppe von Ölen, Füllstoffen und Additiven; und ein harzkompatibles Material ausgewählt aus der Gruppe bestehend aus Styrol/Isopren-Blockpolymeren, Butadien/Styrol-Blockpolymeren, Isopren-Kautschuken, Vinyl- oder Acryl-basierten Polyolefinen, Epoxy-basierten Thermoplasten und Phenoxyharzen umfasst, worin das harzkompatible Material zum Vernetzen mit dem natürlich vorkommenden Harz verwendet wird.

2. Verwendung nach Anspruch 1, wobei das genannte harzkompatible Material reiner Isopren-Kautschuk (auf Ziegler-Natta-Basis oder basierend auf anionischer Polymerisation) ist.

3. Verwendung nach Anspruch 1 oder 2, wobei das genannte harzkompatible Material als Film oder Folie aufgebracht wird.

4. Verwendung nach den Ansprüchen 1 bis 3, wobei das harzkompatible Material mit Füllstoffen gemischt wird, vorzugsweise Füllstoffen ausgewählt aus der Gruppe bestehend aus Silika, SiO₂, TiO₂, Talk, Kalk, Glimmer, Carbonaten und Lignin.

5. Verwendung nach Anspruch 1, wobei das Vernetzen durch UV-Licht, Elektronenstrahl (EB), Wärme-, Ultraschall- oder andere Quellen für hohe Energie und Strahlung eingeleitet wird.

6. Verwendung nach Anspruch 1, wobei das Vernetzen durch Perozidverbindungen, Schwefel, Schwefelverbindungen, Diazoverbindungen oder UV-absorbierende Moleküle eingeleitet wird.

7. Verwendung nach den Ansprüchen 1 bis 6, welche ferner die Stufe der Anwendung einer Wärmebehandlung umfasst.

8. Verwendung nach einem der Ansprüche 1 bis 7 zur Behandlung von natürlich vorkommendes Harz enthaltendem Holzsubstrat, welche die folgenden Stufen umfasst:
- Identifizieren von Harzkanälen und/oder Rissen und/oder Astknorren in der Oberfläche des Holzsubstrats, und
- Aufbringen einer Beschichtung, wie im Anspruch 1 definiert, auf die identifizierten Harzkanäle und/oder Risse und/oder Astknorren in der Oberfläche des Holzsubstrats, und
- Binden der Beschichtung auf die Oberfläche des Holzsubstrats durch Vernetzen des harzkompatiblen Materials mit dem Harz im Holzsubstrat.

9. Verwendung nach Anspruch 8, welche ferner die Stufe des Entfernens mindestens eines Teils der identifizierten Harzkanäle und/oder Risse und/oder Astknorren in der Oberfläche des Holzsubstrats umfasst, bevor die Beschichtung aufgebracht wird.

10. Verwendung nach Anspruch 9, wobei eine Schicht, die sich von der Oberfläche und in das Holzsubstrat hinein mit einer Dicke von 0,1 mm bis 0,5 mm erstreckt, von den identifizierten Harzkanälen und/oder Rissen und/oder Astknorren in der Oberfläche des Holzsubstrats entfernt wird, bevor die Beschichtung aufgebracht wird.

11. Verwendung nach einem der Ansprüche 1 bis 10, wobei das harzkompatible Material eine Dicke zwischen 0,1 und 3000 µm, bevorzugt zwischen 0,2 und 100 µm aufweist.

12. Verwendung nach einem der Ansprüche 1 bis 11, wobei die Zusammensetzung Füllstoffe in einer Menge von 0 bis 90 Gew.-%, bevorzugt in einer Menge von 20 bis 50 Gew.-% umfasst.

13. Verwendung nach Anspruch 1, wobei das eine oder die mehreren Bindemittel aus der Gruppe bestehend aus Urethan, Epoxy, Acrylat, Polyvinylalkohol, Polyvinylacetat und Polyvinylacrylat ausgewählt sind.

14. Verwendung nach Anspruch 1, wobei das eine oder die mehreren Öle aus der Gruppe bestehend aus synthetischen Ölen und Mineralölen ausgewählt sind.

15. Verwendung nach Anspruch 1, wobei die Additive aus der Gruppe bestehend aus Färbemitteln, Stabilisatoren, rheologischen Hilfsmitteln ausgewählt sind.

16. Verwendung nach den Ansprüchen 1 bis 15, wobei die Zusammensetzung umfasst:
| | |
|---|---|
| White Spirit | 5-10 % |
| Solventnaphtha (Rohöl) | 1-5 % |
| mittel-schweres aliphatisches 2-Butanonoxim | < 1 % |
| Organische Kobaltverbindung | < 0,5 % |
| Urethan | 0,1-50 % |
| harzkompatibles Material | 0,1-60 % |
| Rest | Carbonate |
wobei das harzkompatible Material wie im Anspruch 1 definiert ist.

17. Verwendung nach den Ansprüchen 1-16, wobei die Zusammensetzung auf Unregelmäßigkeiten, Risse und Astknorren auf der Oberfläche des harzhaltigen Holzsubstrats aufgebracht wird.

## Revendications

1. Utilisation d'une composition pour recouvrir au moins une partie d'une surface d'un substrat de bois contenant une résine se formant naturellement, composition qui comporte un ou plusieurs liants ; une ou plusieurs substances sélectionnées à partir du groupe des huiles, des charges, et des additifs ; et un matériau compatible avec la résine sélectionné à partir du groupe constitué de polymères en masse de styrène-isoprène, de polymères en masse de butadiène-styrène, de caoutchoucs isoprène, de polyoléfines à base de vinyle, de polyoléfines à base d'acryle, de matériaux thermoplastiques à base d'époxy et de résines phénoxy, dans laquelle le matériau compatible avec la résine est utilisé pour réticuler avec ladite résine qui se forme naturellement.

2. Utilisation selon la revendication 1, dans laquelle ledit matériau compatible avec la résine est un caoutchouc isoprène pur (à base du procédé Ziegler-Natta ou sur la base d'une polymérisation anionique).

3. Utilisation selon la revendication 1 ou 2, dans laquelle ledit matériau compatible avec la résine est appliqué sous la forme de film ou d'une couche mince.

4. Utilisation selon les revendications 1 à 3, dans laquelle ledit matériau compatible avec la résine est mélangé avec des charges, de préférence lesdites charges sont sélectionnées dans le groupe constitué de silice, de SiO₂, de TiO₂, de talc, de chaux, de mica, de carbonates et de lignine.

5. Utilisation selon la revendication 1, dans laquelle la réticulation est initiée par une lumière ultra violette, un faisceau d'électrons (EB), de la chaleur, des ultrasons ou d'autres sources d'énergie élevée et de rayonnement.

6. Utilisation selon la revendication 1, dans laquelle la réticulation est initiée par des composés de peroxyde, du soufre, des composés de soufre, des composés diazo ou des molécules absorbant les UV.

7. Utilisation selon les revendications 1 à 6, qui comprend, de plus, l'étape consistant à appliquer un traitement thermique.

8. Utilisation selon l'une quelconque des revendications 1 à 7 pour le traitement d'un substrat de bois contenant une résine se formant naturellement, laquelle comporte les étapes consistant à :
- identifier des canaux de résine et/ou des fissures et/ou des noeuds à la surface dudit substrat de bois, et
- appliquer le revêtement tel que défini dans la revendication 1 sur lesdits canaux identifiés de résine et/ou lesdites fissures et/ou lesdits noeuds à la surface dudit substrat de bois, et
- lier le revêtement à la surface du substrat de bois par réticulation du matériau compatible avec la résine à la résine du substrat de bois.

9. Utilisation selon la revendication 8, laquelle comprend de plus l'étape consistant à retirer au moins une partie des canaux de résine identifiés et/ou des fissures et/ou des noeuds formés à la surface dudit substrat de bois avant d'appliquer le revêtement.

10. Utilisation selon la revendication 9, dans laquelle une couche s'étendant à partir de la surface et dans le substrat de bois présentant une épaisseur de 0,1 à 0,5 mm est éliminée des canaux de résine identifiés et/ou des fissures et/ou des noeuds de la surface dudit substrat de bois avant d'appliquer le revêtement.

11. Utilisation selon l'une quelconque des revendications 1 à 10, dans laquelle le matériau compatible avec la résine présente une épaisseur comprise entre 0,1 et 3000 *µ*m, de préférence entre 0,2 et 100 *µ*m.

12. Utilisation selon l'une quelconque des revendications 1 à 11, dans laquelle la composition comporte une charge représentant une quantité de 0 à 90 % en poids, de préférence une quantité de 20 à 50 % en poids.

13. Utilisation selon la revendications 1, dans laquelle un ou plusieurs liant(s) est (sont) sélectionné(s) à partir du groupe constitué d'uréthanne, d'époxy, d'acrylate, d'alcool polyvinylique, de polyacétate de vinyle et de polyacrylate vinyle.

14. Utilisation selon la revendication 1, dans laquelle une ou plusieurs huile (s) est (sont) sélectionnée(s) dans le groupe constitué par les huiles synthétiques et les huiles minérales.

15. Utilisation selon la revendication 1, dans laquelle les additifs sont sélectionnés à partir du groupe constitué de colorants, de stabilisants, ou d'un assistant rhéologique.

16. Utilisation selon les revendications 1 à 15, dans laquelle la composition comprend :
| | |
|---|---|
| du white spirit | 5-10 % |
| du naphta solvant (pétrole brut) | 1-5 % |
| du 2-butanonoxime aliphatique moyen-lourd | <1 % |
| un composé de cobalt organique | < 0,5 % |
| de l'uréthanne | 0,1 - 50 % |
| un matériau compatible avec la résine | 0,1 - 60 % |
| le reste | carbonates |
dans laquelle le matériau compatible avec la résine est tel que défini dans la revendication 1.

17. Utilisation selon les revendications 1 à 16, dans laquelle la composition est appliquée sur des irrégularités, des fissures et des noeuds à la surface du substrat de bois contenant une résine se formant naturellement.
